# EUROPÄISCHE PATENTSCHRIFT

(11) **EP 2 233 189 B1**
(45) Veröffentlichungstag und Bekanntmachung des Hinweises auf die Patenterteilung: **02.01.2013**
(21) Anmeldenummer: 10156392.2
(22) Anmeldetag: 12.03.2010
(51) Int. Cl.: B01D 35/16, F16B 33/00

(54) **Hohlschraube**
Hollow screw
Vis creuse

(30) Priorität: 04.12.2009 DE 102009057103; 26.03.2009 DE 202009016415 U
(43) Veröffentlichungstag der Anmeldung: 29.09.2010
(73) Patentinhaber: Mahle International GmbH, 70376 Stuttgart (DE)
(72) Erfinder: Lamotte, Johann, 95260, Beaumont sur Oise (FR); Widmaier, Andreas, 71083, Herrenberg (DE)
(74) Vertreter: Bernhard, Uwe

(56) Entgegenhaltungen:
- DE-A1- 2 445 454
- JP-A- 2000 274 222

## Beschreibung

Die vorliegende Erfindung betrifft eine Hohlschraube zum Einbau in eine Filtereinrichtung, insbesondere zum Einbau in eine Ölfiltereinrichtung. Die Erfindung betrifft außerdem eine Filtereinrichtung mit einer derartigen Hohlschraube.

Hohlschrauben werden insbesondere in modernen Filtereinrichtungen, bspw. in Ölfiltereinrichtungen, aber auch zum Anschluss von Kraftstoffleitungen, bspw. in einen Vergaser, verwendet, wobei diese nicht zwingend, aber üblicherweise einen gängigen Sechskantkopf besitzen, um darüber in eine entsprechend ausgestaltete Öffnung an der Filtereinrichtung eingeschraubt werden zu können. Üblicherweise sind dabei die bekannten Holschrauben aus Metall und damit nur vergleichsweise aufwendig und damit teuer zu fertigen.

Dokumente DE 2 445 454 und JP 2000 274 222 zeigen und beschreiben Hohlschrauben in Filtevorrichtungen.

Die vorliegende Erfindung beschäftigt sich mit dem Problem, eine verbesserte Ausführungsform einer Hohlschraube anzugeben, die insbesondere einfacher und damit kostengünstiger zu fertigen ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine an sich bekannte Hohlschraube zweiteilig, nämlich aus einem vergleichsweise kostengünstigen und aus Kunststoff gefertigten Grundkörper sowie einem damit lösbar oder unlösbar fest verbundenen metallischen Anbauteil auszubilden. Bisher waren derartige Hohlschrauben, beispielsweise zur Befestigung eines Filtergehäuses an einem Motorflansch zur Verpressung an einer Dichtung an einem Motorflansch, zur Aufnahme einer Schraubenvorspannkraft sowie zur Trennung einer Rein- und einer Rohseite, aus Metall ausgebildet und dadurch vergleichsweise teuer und aufwändig herzustellen. Mit der erfindungsgemäßen Unterteilung der Hohlschraube in einen aus Kunststoff und einen damit verbundenen aus Metall ausgebildeten Bereich, lässt sich eine Kostenersparnis von bis zu 50% erreichen, da nicht mehr die gesamte Hohlschraube aus Metall ausgebildet werden muss, sondern lediglich der zur Übertragung der Vorspannkräfte relevante Bereich. Der aus Kunststoff ausgebildete Grundkörper weist dabei zumindest zwei Radialöffnungen und eine Axialöffnung auf, wobei das metallische Anbauteil ein Innen- oder Außengewinde besitzt und in der Axialöffnung des Grundkörpers fixiert, beispielsweise darin eingepresst, verclippst, verschweißt, umspritzt bzw. verklebt wird. Durch den metallisch ausgebildeten Bereich des Anbauteils kann darüber hinaus ein belastungsgerechtes Design erreicht werden, wobei das Anbauteil eine Vorspannfunktion sowie ein Fixieren eines Gehäuses einer Filtereinrichtung beispielsweise an einem Motorflansch übernimmt, während der aus Kunststoff ausgebildete Grundkörper zur Aufnahme eines Betriebsdrucks und zur Übernahme einer Dichtfunktion verwendet werden kann. Darüber hinaus kann auch ein Druckverlust auf Grund eines größeren möglichen Querschnitts bezüglich der Radialöffnungen reduziert werden.

Zweckmäßig ist der Grundkörper der erfindungsgemäßen Hohlschraube als Kunststoffspritzgussteil ausgebildet. Kunststoffspritzgussteile lassen sich bekanntermaßen vergleichsweise kostengünstig und maßgenau herstellen, so dass die Fertigung der erfindungsgemäßen Hohlschraube insgesamt qualitativ hochwertig und kostengünstig realisiert werden kann.

Bei einer weiteren vorteilhaften Ausführungsform der erfindungsgemäßen Lösung, weist der Grundkörper an seinem geschlossenen Längsendbereich eine angeformte Haltekontur, insbesondere in der Art eines Sechskants, auf. Über diesen Sechskant ist ein Fixieren der erfindungsgemäßen Hohlschraube beispielsweise an einem Motorflansch problemlos möglich, wobei selbstverständlich auch andere Haltekonturen, wie beispielsweise ein Außenmehrsechskant oder ein Kreuzschlitz, denkbar sind. Vorzugsweise sind diese Haltekonturen nicht durch separate Bauteile gebildet, sondern werden zusammen mit dem Grundkörper der Hohlschraube, beispielsweise im Kunststoffspritzgussverfahren, hergestellt, wodurch sich diese vergleichsweise kostengünstig realisieren lassen.

Bei einer vorteilhaften Weiterbildung der erfindungsgemäßen Lösung, sind die Radialöffnungen der Hohlschraube im Bereich zwischen zwei Radialkragen angeordnet. Beim Einschrauben der Hohlschraube in eine zugehörige Einschrauböffnung an der Filtereinrichtung können dabei die beiden Radialkragen als Ringdichtungen dienen, indem sie sich dichtend an einen Innenraum anlegen und dadurch den Bereich zwischen den beiden Radialkragen in Axialrichtung der Hohlschraube abdichten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf eine erfindungsgemäße Hohlschraube,
- Fig. 2: eine Schnittdarstellung durch die Hohlschraube,
- Fig. 3: eine Schnittdarstellung wie in Fig. 2, jedoch bei einer anderen Ausführungsform,
- Fig. 4: einen Einbauzustand der erfindungsgemäßen Hohlschraube in einer Filtereinrichtung,
- Fig. 5: eine Schnittdarstellung durch die Filtereinrichtung gemäß der Fig. 4.

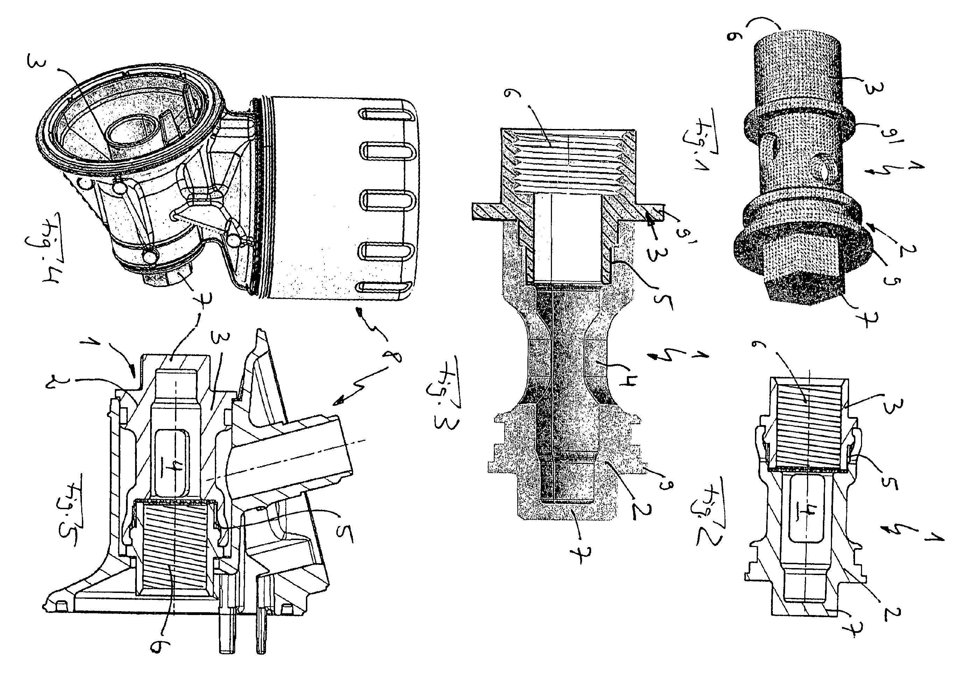

Entsprechend den Fig. 1 bis 3, weist eine erfindungsgemäße Hohlschraube 1, einen zweiteiligen Aufbau auf, nämlich ein aus Kunststoff ausgebildeten Grundkörper 2, sowie ein aus Metall ausgebildetes Anbauteil 3. Der aus Kunststoff ausgebildete Grundkörper 2 weist darüber hinaus zumindest zwei Radialöffnungen 4 sowie eine Axialöffnung 5 auf, wobei das metallische Anbauteil 3 in der Axialöffnung 5 des Grundkörpers 2 fixiert ist und wie dies insbesondere den Fig. 2 und 3 zu entnehmen ist, ein Innengewinde 6 besitzt. Selbstverständlich kann auch ein Außengewinde vorgesehen sein. Durch die erfindungsgemäße zweiteilige Ausbildung der Hohlschraube 1 aus einem aus Kunststoff ausgebildeten Grundkörper 2 und dem metallischen Anbauteil 3 lassen sich die Herstellungskosten der erfindungsgemäßen Hohlschraube 1 deutlich reduzieren, insbesondere dann, wenn der Grundkörper 2 zusätzlich als Kunststoffspritzgussteil ausgebildet ist. Die vorzugsweise zumindest zwei im Grundkörper vorgesehenen Radialöffnungen 4 können dabei, wie gemäß den Fig. 2 und 5 gezeigt ist, als Langlöcher ausgebildet sein. Selbstverständlich ist auch eine Hohlschraube 1 denkbar, die keine oder lediglich eine Radialöffnung 4 aufweist. An seinem geschlossenen Längsendbereich weist der Grundkörper 2 eine angeformte Haltekontur 7, insbesondere in der Art eines Sechskants, auf. Diese Haltekontur 7 kann selbstverständlich auch als Kreuzschlitz oder als Innenmehrkant ausgebildet sein und dient lediglich zur drehfesten Verbindung mit einem nicht gezeigten Werkzeug, über welches die Hohlschraube 1 in eine zugehörige Filtereinrichtung 8 (vgl. Fig. 4 und 5) eingeschraubt wird. Die Filtereinrichtung 8 ist dabei beispielsweise als Kraftstofffilter ausgebildet, kann aber auch als Schmierstofffilter ausgebildet sein.

Der Grundkörper 2 und das Anbauteil 3 sind (lösbar-)fest aneinander fixiert, insbesondere miteinander verklebt, verschweißt oder verclippst. Darüber hinaus ist auch denkbar, dass der Grundkörper 2 mittels Kunststoffspritzgussverfahren an das metallische Anbauteil 3 angespritzt und dadurch unlösbar fest mit diesem verbunden wird. Auch eine Clipsverbindung zwischen dem Grundkörper 2 und dem metallischen Anbauteil 3 ist denkbar, wodurch insbesondere ein Verbindungsprozess der beiden Bauteile vereinfacht wird.

Betrachtet man insbesondere die Fig. 1, so kann man erkennen, dass die Radialöffnungen 4 in einem Bereich zwischen zwei axial dazu benachbart angeordneten Radialkragen 9 und 9' angeordnet sind. Diese Radialkragen 9 und 9' können beispielsweise eine Dichtung bilden. Denkbar ist auch, dass neben dem Radialkragen 9 eine nicht gezeichnete O-Ringdichtung vorgesehen ist, so dass der Bereich der Radialöffnungen 4 in Axialrichtung der Hohlschraube 1 nach dem Einschrauben in eine zugehörige Öffnung an der Filtereinrichtung 8 abgedichtet ist. Mit der erfindungsgemäßen Hohlschraube 1 ist es darüber hinaus möglich, diese belastungsgerecht auszulegen, wobei über das metallische Anbauteil 3 die Kräfte übertragen werden, während der aus Kunststoff ausgebildete Grundkörper 2 lediglich zur Aufnahme des Betriebsdrucks und der Dichtfunktion nach außen verwendet wird. Die Radialöffnungen 4 können dabei als Langlöcher ausgebildet sein, oder aber als normale Bohrungen, wobei insbesondere durch das Vorsehen von vergleichsweise großen Langlöchern als Radialöffnungen 4 ein Druckverlust verringert werden kann.

Die erfindungsgemäße Hohlschraube 1 ist im Vergleich zu bisher gänzlich aus Metall hergestellten Hohlschrauben deutlich kostengünstiger zu realisieren, wobei zugleich die belastungsgerechte Auslegung erfolgen kann, so dass insbesondere das metallische Anbauteil 3 zur Aufnahme von entsprechenden Schraubvorspannkräften genutzt werden kann.

## Patentansprüche

1. Hohlschraube (1) zum Einbau in eine Filtereinrichtung (8), insbesondere in eine Ölfiltereinrichtung, mit einem
- aus Kunststoff ausgebildeten Grundkörper (2), der zumindest zwei Radialöffnungen (4) und eine Axialöffnung (5) aufweist,
- metallischen Anbauteil (3), das in der Axialöffnung (5) des Grundkörpers (2) fixiert ist und ein Innen- oder Außengewinde (6) aufweist.

2. Hohlschraube nach Anspruch 1,
**dadurch gekennzeichnet,**
**dass** der Grundkörper (2) als Kunststoffspritzgussteil ausgebildet ist.

3. Hohlschraube nach Anspruch 1 oder 2,
**dadurch gekennzeichnet,**
**dass** zumindest eine der Radialöffnungen (4) als Langloch ausgebildet ist.

4. Hohlschraube nach einem der Ansprüche 1 bis 3,
**dadurch gekennzeichnet,**
**dass** der Grundkörper (2) an seinem geschlossenen Längsendbereich eine angeformte Haltekontur (7), insbesondere in der Art eines Sechskants, aufweist.

5. Hohlschraube nach einem der Ansprüche 1 bis 4,
**dadurch gekennzeichnet,**
**dass** der Grundkörper (2) und das Anbauteil (3) miteinander verklebt, verclippst, verpresst oder verschweißt sind, oder dass der Grundkörper (2) an das Anbauteil (3) angespritzt ist.

6. Hohlschraube nach einem der Ansprüche 1 bis 5,
**dadurch gekennzeichnet,**
**dass** die Radialöffnungen (4) in einem Bereich zwischen zwei Radialkragen (9,9') angeordnet sind.

7. Hohlschraube nach Anspruch 6,
**dadurch gekennzeichnet,**
**dass** die Radialkragen (9,9') eine Dichtung bilden.

8. Filtereinrichtung (8), insbesondere eine Ölfiltereinrichtung, mit einer Hohlschraube (1) nach einem der Ansprüche 1 bis 7.

## Claims

1. A hollow screw (1) for mounting in a filter device (8), in particular in an oil filter device, with
- a base body (2) formed from plastic, which has at least two radial openings (4) and one axial opening (5),
- a metallic attachment part (3) which is fixed in the axial opening (5) of the base body (2), and which has an internal or an external thread (6).

2. The hollow screw according to claim 1,
**characterized in**
**that** the base body (2) is formed as a plastic injection molding part.

3. The hollow screw according to claim 1 or claim 2,
**characterized in**
**that** at least one of the radial openings (4) is formed as a longitudinal hole.

4. The hollow screw according to any one of the claims 1 to 3,
**characterized in**
**that** at its closed longitudinal end region, the base body (2) has an integrally formed retaining contour (7), in particular of the type of a hexagon.

5. The hollow screw according to any one of the claims 1 to 4,
**characterized in**
**that** the base body (2) and the attachment part (3) are glued, clipped, press-fitted, or welded to one another, or that the base body (2) is injection-molded on the attachment part (3).

6. The hollow screw according to any one of the claims 1 to 5,
**characterized in**
**that** the radial openings (4) are arranged in a region between two radial collars (9, 9').

7. The hollow screw according to claim 6,
**characterized in**
**that** the radial collars (9, 9') form a sealing.

8. A filter device (8), in particular an oil filter device, with a hollow screw (1) according to any one of the claims 1 to 7.

## Revendications

1. Vis creuse (1) à monter dans un dispositif de filtrage (8), notamment dans un dispositif de filtre à huile, comportant
- un corps de base (2) réalisé en plastique, qui présente au moins deux ouvertures radiales (4) et une ouverture axiale (5),
- un insert métallique (3), qui est fixé dans l'ouverture axiale (5) du corps de base (2) et présente un pas de vis intérieur ou extérieur (6).

2. Vis creuse selon la revendication 1,
**caractérisée en ce que**
le corps de base (2) est réalisée comme une pièce moulée par injection en plastique.

3. Vis creuse selon les revendications 1 ou 2,
**caractérisée en ce que**
au moins une des ouvertures radiales (4) est réalisée comme un alésage oblong.

4. Vis creuse selon une des revendications 1 à 3,
**caractérisée en ce que**
le corps de base (2) présente sur sa zone d'extrémité longitudinale fermée un contour de retenue (7) façonné, notamment à la manière d'un hexagone.

5. Vis creuse selon une des revendications 1 à 4,
**caractérisée en ce que**
le corps de base (2) et l'insert (3) sont collés, clipsés, pressés ou soudés l'un à l'autre, ou **en ce que** le corps de base (2) est moulé par injection sur l'insert (3).

6. Vis creuse selon une des revendications 1 à 5,
**caractérisée en ce que**
les ouvertures radiales (4) sont disposées dans une zone entre deux colliers radiaux (9,9').

7. Vis creuse selon la revendication 6,
**caractérisée en ce que**
les colliers radiaux (9,9') forment un joint d'étanchéité.

8. Dispositif de filtrage (8), notamment dispositif de filtre à huile, comportant une vis creuse (1) selon une des revendications 1 à 7.
